# FASCICULE DE BREVET EUROPEEN

(11) **EP 2 555 177 B1**
(45) Date de publication et mention de la délivrance du brevet: **04.10.2017**
(21) Numéro de dépôt: 12179167.7
(22) Date de dépôt: 03.08.2012
(51) Int. Cl.: G08C 17/00, H04L 12/28

(54) **Systeme domotique et procédé de mise en oeuvre d'un systeme domotique**
Haus- und Heimsystem, und Verfahren zur Umsetzung eines Haus- und Heimsystems
Home-automation system and method for implementing a home-automation system

(30) Priorité: 05.08.2011 FR 1157199
(43) Date de publication de la demande: 06.02.2013
(73) Titulaire: SOMFY ACTIVITES SA, 74300 Cluses (FR)
(72) Inventeur: Mignot, Pierre, 05380 Chateauroux-Les-Alpes (FR)
(74) Mandataire: Lavoix

(56) Documents cités:
- US-A1- 2007 055 988
- US-A1- 2007 229 465

## Description

La présente invention concerne un système domotique adapté pour équiper un bâtiment ou un ensemble de bâtiments. L'invention concerne également un procédé de mise en oeuvre d'un système domotique. Le domaine de l'invention est celui des systèmes de commande domotique, en particulier les systèmes de commande des ouvrants de la maison : portes, fenêtre, volets, portes de garage, portails, écrans ou protections solaires diverses.

Ces systèmes de commande domotiques comportent des points de commande nomades ou fixes, ainsi que des actionneurs permettant de provoquer le mouvement des ouvrants de la maison. Les points de commande présentent une interface utilisateur plus ou moins évoluée, permettant à un utilisateur d'envoyer des ordres de commande vers les actionneurs et de lire des informations en retour.

Pour des raisons de coût, la plupart des points de commande ne possède pas d'interface visuelle, ou alors une interface visuelle limitée, présentant un nombre limité d'informations. D'autres points de commande comportent un écran d'affichage de grande taille, ce qui impacte l'encombrement, l'autonomie et le coût de ces matériels.

En alternative, le ou les points de commande peuvent être reliés à un ordinateur, pour visualiser un nombre important d'informations et régler de manière simple les paramètres du système. Les temps d'accès à l'ordinateur, puis de démarrage du programme, empêchent une programmation simple et rapide des points de commande. D'autre part, un programme dédié doit être installé sur l'ordinateur.

Alors que les systèmes domotiques présentent une étendue et une complexité croissante, la satisfaction de l'utilisateur est liée, d'une part, à la possibilité de visualiser plus précisément une grande quantité d'informations de fonctionnement et de paramètres réglables et, d'autre part, d'être équipé de points de commande nomades, simples d'utilisation et aussi peu nombreux que possible.

EP-A-1 870 867 décrit un système domotique comprenant plusieurs points de commande de plusieurs équipements domotiques, par exemple des dispositifs d'entraînement en mouvements d'éléments mobiles de protection solaire, d'occultation ou de fermeture. Dans un mode normal, chaque point de commande pilote un ou plusieurs équipements domotiques qui lui sont associés. Dans un mode avancé, les informations relatives à un équipement domotique piloté par un premier point de commande présentant un affichage limité peuvent être affichées par un deuxième point de commande présentant un affichage détaillé.

Par ailleurs, un point de commande peut être muni d'un écran d'affichage de données et d'une interface de saisie distincte. L'utilisation d'écrans tactiles permet de combiner ces deux fonctions, à savoir, la saisie et l'affichage, mais au détriment de la présentation d'information qui doit être réalisée de manière plus complexe ou partielle.

US-A-2007/229465 décrit différents procédés et système de commande d'équipements multimédias. Ces systèmes comprennent typiquement un serveur, une ou plusieurs télécommandes et un ou plusieurs dispositifs d'affichage. Lorsque le système est en veille, la télécommande ne peut pas piloter les équipements multimédias. En sortie de veille, la télécommande communique avec le dispositif d'affichage, directement ou via le serveur. La télécommande comprend alors une interface variable en fonction du menu sélectionné, mais les informations affichables ne peuvent pas être exportées vers le dispositif d'affichage. A titre d'exemple, la télécommande peut afficher des boutons-images, mais ceux-ci représentent uniquement une interface de saisie (pochettes d'albums) et non pas l'information à afficher (vidéo ou musique). En outre, ces systèmes sont adaptés pour la commande d'équipements multimédias, mais pas la commande d'équipements domotiques tels que par exemple un store motorisé, un système motorisé d'ouverture et de fermeture de battants de volet, un portail extérieur, un aspirateur autonome ou un ensemble de lampes programmables.

Le but de la présente invention est de proposer un système domotique équipé d'un point de commande central, procurant un compromis satisfaisant entre la mobilité du point de commande et le confort de programmation et/ou d'utilisation et améliorant les dispositifs de l'état de la technique.

A cet effet, l'invention a pour objet un système domotique, tel que défini à la revendication 1.

Ainsi l'invention permet d'améliorer le confort d'utilisation et de programmation, avec un unique point de commande central mobile et pratique. L'utilisateur peut choisir d'utiliser le point de commande seul, en mode normal, ou en association avec le dispositif d'affichage, en mode avancé. Le point de commande présente une taille et un poids minimaux qui lui procure une mobilité importante, tandis que la maximisation de l'interface homme-machine sur le dispositif d'affichage procure un confort de programmation élevé. Avantageusement, l'exportation de données à afficher est réalisée en temps réel.

D'autres caractéristiques avantageuses de l'invention, prises isolément ou en combinaison, sont définies aux revendications 2 à 16.

L'invention a également pour objet un procédé de mise en oeuvre d'un système domotique, tel que défini à la revendication 17.

En particulier, le procédé peut être tel que défini à la revendication 18.

L'invention sera mieux comprise à la lecture de la description qui va suivre, donnée uniquement à titre d'exemple non limitatif et faite en référence aux dessins annexés sur lesquels :
- la figure 1 est une représentation schématique d'un bâtiment d'habitation équipé d'un système domotique conforme à l'invention ;
- la figure 2 est un logigramme représentant le système domotique en mode normal ; et
- la figure 3 est un logigramme représentant le système domotique en mode avancé.

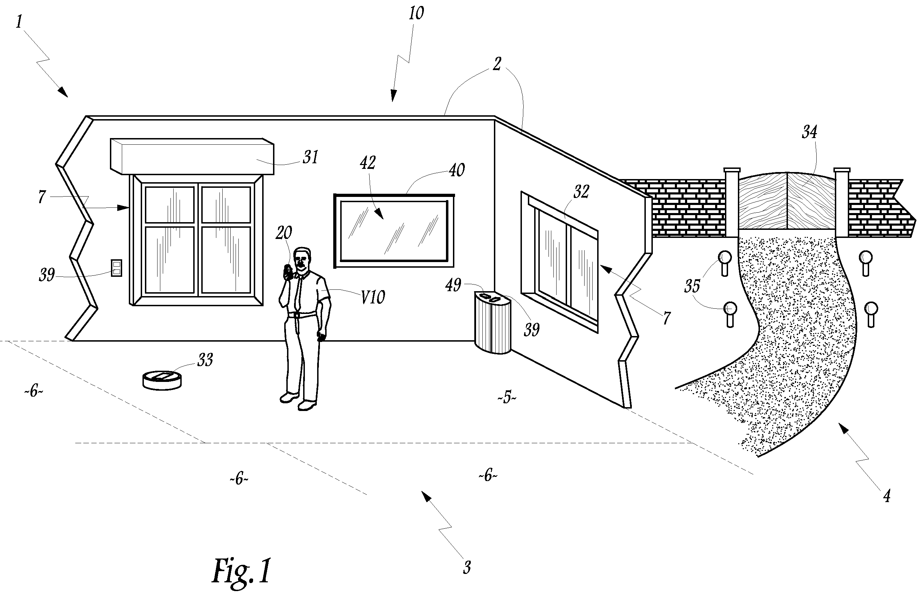

Sur la figure 1 est représenté un bâtiment d'habitation 1 équipé d'un système domotique 10.

Le bâtiment d'habitation 1 comporte des murs 2 délimitant un espace intérieur 3 et un espace extérieur 4. L'intérieur 3 comprend plusieurs pièces 5 et 6, notamment une pièce principale ou pièce à vivre 5, ainsi que d'autres pièces 6. L'extérieur 4 comprend un muret, un jardin et une allée. Des ouvertures 7 sont ménagées dans les murs 2 entre l'intérieur 2 et l'extérieur 4. En particulier, la pièce principale 5 comprend des ouvertures 7 munies respectivement d'un store motorisé 31 et d'un système motorisé 32 d'ouverture et de fermeture de battants de volet, les actionneurs n'étant pas représentés dans un but de simplification. La pièce principale 5 comprend également un aspirateur autonome 33 circulant au sol, un dispositif d'affichage 40, tel qu'un téléviseur, disposé contre un mur 2, ainsi que d'autres éléments de mobilier, non représentés dans un but de simplification. L'extérieur 3 comprend un portail motorisé 34 et un ensemble 35 de lampes programmables.

Les éléments 31 à 35 sont des équipements domotiques 30. Chaque équipement domotique 30 peut être muni d'un appareil de commande spécifique 39, indépendamment des autres équipements domotiques 30. Par exemple, les appareils 39 peuvent être des boitiers fixés au mur 2 ou des télécommandes. Un nombre élevé d'appareils de commande 39 est peu pratique, nécessitant d'accéder à l'appareil 39 dédié à chaque équipement 30 pour son utilisation. De plus, lorsque les appareils 39 sont des télécommandes, celles-ci peuvent être égarées dans le bâtiment 1.

En variante non représentée, le bâtiment 1 peut être tout type de bâtiment ou ensemble de bâtiment, comportant un espace intérieur 3 et/ou un espace extérieur 4, sans sortir du cadre de l'invention. Le bâtiment 1 est équipé d'au moins un, et de préférence de plusieurs, équipements domotiques 30.

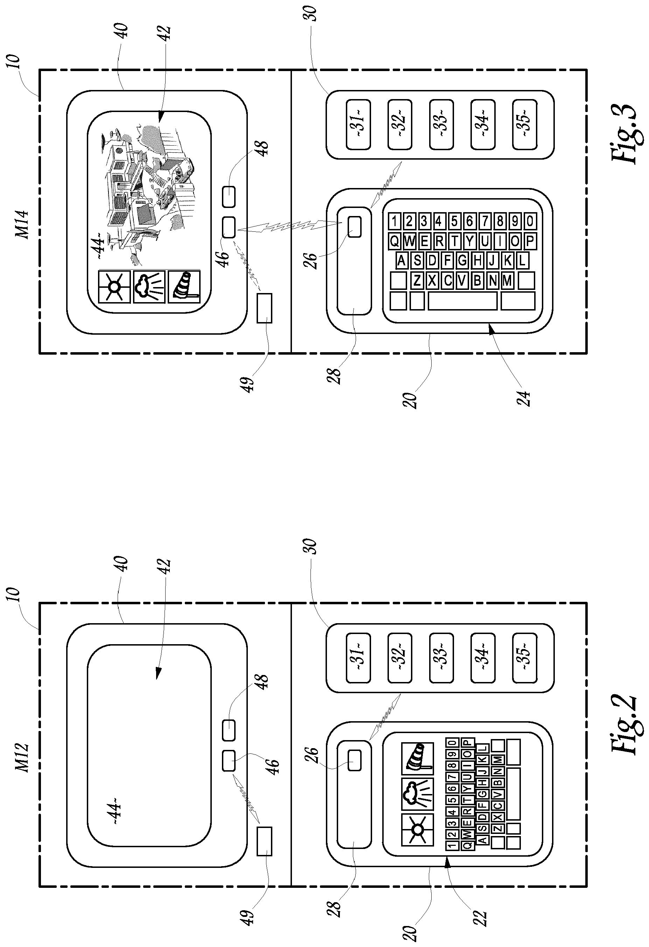

Dans le cadre de l'invention, le bâtiment 1 est également équipé du système domotique 10. Ce système domotique 10 est montré à la figure 1 et représenté schématiquement sur des logigrammes aux figures 2 et 3. Plus précisément, le système 10 et ses éléments constitutifs sont représentés dans un mode dit de fonctionnement normal ou basique M12 à la figure 2 et dans un mode dit de fonctionnement avancé M14 à la figure 3. Les échelles de grandeur ne sont pas respectées sur la représentation schématique des figures 2 et 3, afin de montrer les éléments constitutifs du système 10.

Le système domotique 10 comprend un point de commande central 20, les équipements domotiques 30 et le dispositif d'affichage 40. Le système domotique 10 est configuré pour fonctionner sélectivement en mode normal M12 ou en mode avancé M14, comme détaillé ci-après.

Le point de commande central 20 comprend une interface homme-machine de saisie et d'affichage 22 et des moyens 26 de communication filaire ou sans-fil, reliées à un microprocesseur et à une mémoire non représentés et intégrés au point de commande 20. Le point de commande 20 permet à un utilisateur U10 de piloter le système domotique 10, en particulier les équipements domotiques 30. Le pilotage peut se faire par transmission d'un ordre depuis le point de commande 20, soit directement vers l'équipement 30, soit indirectement. Par exemple, la transmission indirecte peut être effectuée via une application logicielle, notamment une application installée sur un téléphone mobile connecté à un dispositif de commande distante, et/ou via un boîtier relais transmettant ou traduisant l'information pour l'équipement 30.

Le point de commande 20 est de préférence un terminal nomade muni d'un écran tactile et couleur. Le point de commande 20 pilote chaque équipement domotique 30 à la fois en mode normal M12 et en mode avancé M14, ou au moins certains des équipements domotiques 30, dans la mesure où une reconnaissance a été effectuée préalablement. Le point de commande 20 peut être du type téléphone avancé (smartphone en anglais), assistant personnel digital (PDA) ou tablette numérique, incluant des fonctions autres que la commande du système domotique 10. Le point de commande 20 peut être un appareil dédié à la fonction de commande du système 10, du type télécommande, plus ou moins évoluée.

L'interface homme-machine de saisie et d'affichage 22 comprend des moyens d'affichage et des moyens de saisie d'informations. L'interface 22 peut comprendre un clavier, des boutons, molettes ou autres dispositifs assurant la fonction de saisie, ainsi que des diodes ou un écran assurant la fonction d'affichage. De préférence, l'interface 22 comprend un écran tactile assurant à la fois les fonctions d'affichage et de saisie. Sur l'exemple de la figure 2, l'interface 22 est munie d'un tel écran tactile affichant un clavier et des icônes. L'affichage de l'interface 22 est limité, permettant au mieux de signifier à l'utilisateur U10 des indications simples telles que, par exemple, l'existence d'informations consultables comme l'existence d'un problème de fonctionnement du système 10. L'affichage de l'interface 22 ne permet pas de signifier de manière simple à l'utilisateur U10 des indications plus complexes telles que, par exemple, un diagnostic détaillé d'un problème de fonctionnement du système 10. Ces informations plus avancées peuvent être disponibles au niveau de l'interface 22, mais leur accès est alors complexe, par exemple si elles appartiennent à des niveaux d'affichage différents. La visualisation de ces informations plus avancées nécessite alors plusieurs opérations de saisie pour obtenir un panorama complet des informations disponibles et des paramètres réglables. Alternativement, toutes les informations sont affichées sur l'écran simultanément, mais au prix d'une résolution insuffisante pour le confort de l'utilisateur U10, qui est alors forcé de zoomer sur certaines parties de l'écran. Par moyen d'affichage limité, on entend un moyen ne permettant pas ou permettant difficilement l'affichage d'une information complexe relative au système domotique 10.

Les moyens de communication 26 comportent un dispositif émetteur-récepteur de signaux pour émettre et recevoir des informations, notamment des ordres de commande. L'émetteur-récepteur est de préférence sans fil, par exemple de type infrarouge ou radio. Les moyens de communication 26 sont configurés pour que le point de commande 20, d'une part, pilote à distance les équipements 30 et, d'autre part, puisse établir une liaison 16 avec le dispositif 40. Une reconnaissance ou synchronisation préalable est établie entre le point de commande 20 et les équipements 30, par exemple par échange de clés et/ou d'identifiants. La liaison 16 entre le point de commande 20 et le dispositif 40 est détaillée ci-après.

Le point de commande 20 comprend également des moyens matériels et logiciels 28 d'exportation en temps réel de données 44 à afficher sur le dispositif d'affichage 40. Sur l'exemple de la figure 3, les données 44 correspondent à des icônes et une représentation du bâtiment 1, et peuvent également comprendre du texte et toute autre information pertinente. De manière non limitative, les données 44 peuvent avantageusement constituer une interface homme-machine avancée, comme détaillé ci-après. Les moyens 28 comprennent le microprocesseur, la mémoire et les moyens de communication 26 du point de commande 20. L'exportation des données 44 déclenche le passage du mode normal M12 au mode avancé M14 du système domotique 10, comme détaillé ci-après.

De préférence, les données 44 sont disponibles au niveau de l'interface 22 en mode normal M12. Cependant, leur exportation vers le dispositif d'affichage 40 améliore le confort de visualisation en mode avancé M14. Autrement dit, dans ce cas, le point de commande 20 comporte une interface 22 d'affichage, en mode normal M12, des données 44 à exporter. En mode avancé M14, le dispositif d'affichage 40 fournit une extension de la partie « affichage » de l'interface homme-machine de saisie et d'affichage 22.

Avantageusement, les données 44 sont distinctes des ordres de commande des équipements domotiques 31-35 ou des ordres relatifs à la navigation dans un menu. En effet, ces ordres de commande ou de navigation sont transmis par l'utilisateur U10 au point de commande 20, par l'intermédiaire de l'interface homme-machine de saisie et d'affichage 22, et interprétés ensuite localement par le point de commande 20. Si une ou plusieurs nouvelles images doivent être affichées suite aux ordres envoyés, cette ou ces nouvelles images sont générées localement par le point de commande 20. Lors d'un fonctionnement en mode avancé M14, des images ainsi générées par le point de commande 20, ainsi que des informations concernant leur affichage, constituent les données 44 exportées ensuite vers le dispositif d'affichage 40.

Ainsi, les informations à afficher sont le résultat des opérations effectuées par le point de commande 20, quel que soit le mode de fonctionnement, normal M12 ou avancé M14, du système domotique 10. Le dispositif d'affichage 40 ne doit pas être adapté pour interpréter les ordres relatifs à la navigation dans les menus de l'application domotique, ce qui permet l'utilisation des équipements standards.

Le dispositif d'affichage 40 est distinct du point de commande 20. De préférence mais non obligatoirement, le dispositif 40 est fixe tandis que le point de commande 20 est mobile. Le dispositif 40 est muni de moyens d'affichage 42 et de moyens 46 de communication avec le point de commande 20. Les moyens d'affichage 42 comprennent un écran, en particulier un écran de dimensions et/ou de résolution supérieures à celui équipant de préférence le point de commande 20. Les moyens de communication 46 peuvent être filaires ou sans-fil. Le dispositif 40 peut également comporter des moyens 48 d'acquisition d'informations émises par l'utilisateur U10, tels que des capteurs sonores, des capteurs de présence, des capteurs de mouvement et/ou des caméras vidéo. A titre d'exemples non limitatifs, le dispositif 40 peut être un téléviseur, un vidéoprojecteur, un pico-projecteur, un ordinateur ou un projecteur holographique.

En mode normal M12, le dispositif d'affichage 40 est indépendant du point de commande 20 et de chaque équipement domotique 31-35. Le contenu des moyens d'affichage 42 est choisi par l'utilisateur U10 à l'aide d'un appareil de commande 49 propre au dispositif 40.

Pour passer du mode normal M12 au mode avancé M14, la liaison 16 est établie entre le point de commande 20 et le dispositif d'affichage 40. La liaison 16 peut être filaire ou sans fil. Lorsque la liaison 16 est sans fil, une reconnaissance ou synchronisation préalable est établie entre le point de commande 20 et le dispositif 40, par exemple par échange de clés et/ou d'identifiants. Par la suite, l'utilisateur U10 active le mode avancé M14 par une commande dédiée sur l'interface de saisie et d'affichage 22, ce qui active la liaison sans-fil 16 et déclenche l'exportation en temps réel des données 44 et/ou de l'interface avancée sur le dispositif 40 par les moyens 28. L'exportation des données 44 ne peut pas être commandée directement par le dispositif d'affichage 40, ni par un boîtier relais ou un serveur par lequel transitent ces données 44. Lorsque la liaison 16 est filaire, l'exportation des données 44 par les moyens 28 peut être soit automatique, dès que le point de commande 20 et le dispositif 40 sont reliés par la liaison filaire 16, soit manuelle, lorsque l'utilisateur U10 active le mode avancé M14 par la commande dédiée sur l'interface de saisie et d'affichage 22. Pour former la liaison 16, les moyens de communication 26 du point de commande 20 et les moyens de communication 46 du dispositif 40 peuvent utiliser l'un des protocoles choisi parmi les suivants : HDMI, MiniDisplay, Wireless-Display, Bluetooth, VGA, Composite, ou tout protocole de communication adapté au transfert des images.

En mode avancé M14, les moyens d'affichage 42 affichent les données 44 exportées par les moyens 28, avec un contenu identique ou enrichi par rapport au contenu affiché sur l'interface de saisie et d'affichage 22 en mode normal M12. Dans le même temps, l'interface de saisie et d'affichage 22 évolue en une interface utilisateur 24 de saisie d'informations relatives aux données 44 affichées sur le dispositif d'affichage 40. Sur l'exemple de la figure 3, l'interface utilisateur 24 comprend uniquement un clavier permettant de choisir ou modifier les données 44. L'évolution de l'interface utilisateur 24 du point de commande 20, recentrée sur les informations nécessaires à la saisie et non plus sur une combinaison d'informations de saisie et d'affichage, permet avantageusement de mieux agencer ces informations de saisie et de fournir une interface de saisie plus évoluée et plus intuitive. De préférence, l'interface de saisie 24 en mode avancé M14 présente un contenu enrichi par rapport au contenu de l'interface 22 en mode normal M12, notamment des éléments de saisie additionnels et/ou une résolution améliorée.

En pratique, le contenu éventuellement enrichi de l'interface avancée 44 procure un confort d'utilisation amélioré à l'utilisateur U10 du système domotique 10. En effet, l'interface avancée 44 est configurée pour afficher simultanément un nombre plus important de données non modifiables et/ou de paramètres réglables relatifs au système domotique 10 que l'interface de saisie et d'affichage 22. De préférence mais non obligatoirement, l'interface avancée 44 n'est pas une simple copie, modification de la résolution d'affichage ou agrandissement, de l'interface de base 22.

A titre d'exemple non limitatif, l'interface avancée 44 peut indiquer des erreurs de fonctionnement des équipements 30 et proposer un diagnostic adapté à l'utilisateur U10. L'interface 44 peut indiquer des états intermédiaires ou des fonctionnalités différentes : bonnes ou mauvaises configurations d'une position de fin de course, enregistrement d'un nouvel émetteur, etc. L'interface 44 peut indiquer qu'un ordre du point de commande 20 a correctement été émis à l'équipement 30 visé, ou à l'inverse, qu'une action de commande n'a pas donné lieu à l'émission d'un ordre de commande. L'ergonomie de retour d'informations de l'interface avancée 44 est simple et intuitive. La quantité de données non modifiables et de paramètres réglables affichés peut être réduite ou augmentée, au choix de l'utilisateur U10.

Pour sa part, l'interface utilisateur de saisie d'informations 24 présente un choix de menus et/ou de fonctions associés au système domotique 10, notamment des menus et fonctions associés à chacun ou au moins certains des équipements domotiques 30. Ainsi, l'interface avancée 44 génère sur les moyens d'affichage 42 des images différentes selon la fonction et/ou le menu sélectionné sur l'interface utilisateur de saisie d'informations 24. En fonction des moyens matériels et logiciels intégrés au point de commande 20, l'interface 24 peut permettre de générer un ou plusieurs des éléments de saisie choisis notamment parmi : un clavier alphanumérique, une souris, un pointeur infrarouge, une surface tactile, un microphone et/ou un ensemble de capteurs de mouvement de l'utilisateur U10.

De préférence, l'interface 24 présente des éléments différents en mode avancé M14 par rapport à l'interface de saisie et d'affichage 22 en mode normal M12. En particulier, étant donné que l'interface avancée 44 et les moyens d'affichage 42 réalisent la fonction d'affichage détaillé en mode avancé M14, l'interface 24 peut comprendre plus d'éléments de saisie d'information et moins d'éléments d'affichage d'informations, voire aucun. A titre d'exemple non limitatif, l'interface de saisie et d'affichage 22 peut comprendre un écran tactile muni de différents espaces d'affichage d'informations relatives au système domotique 10, d'un clavier virtuel et de boutons de commande, tandis que l'interface 24 affiche simplement un clavier virtuel ou un menu déroulant.

Avantageusement, en mode avancé M14, les contenus affichés respectivement par l'interface 24 et par l'interface 44 peuvent changer en accord l'un avec l'autre, selon les menus et/ou fonctions sélectionnés. Par exemple, l'utilisateur U10 utilise un menu déroulant affiché sur l'interface 24 pour choisir l'équipement 31. En réponse, un contenu spécifique à l'équipement 31 s'affiche sur les moyens d'affichage 42 et l'interface 44. L'utilisateur U10 peut alors naviguer dans l'interface 44 par pression sur la surface tactile de l'interface 24, ou en utilisant l'interface 24 comme un pointeur infrarouge, en fonction des moyens matériels et logiciels intégrés au point de commande 20. A la sélection d'un champ textuel modifiable sur l'interface 44, alors l'interface 24 se transforme en clavier virtuel. Un protocole de communication bidirectionnel pour la transmission et le retour d'information est alors préférable.

Lorsque le point de commande 20 est du type téléphone avancé ou tablette numérique, incluant des fonctions autres que la commande du système domotique 10, l'interface utilisateur 24 peut être utilisée pour un autre usage, par exemple de téléphonie ou d'accès aux courriels, avec ou sans désactivation de l'interface avancée 44. De préférence, l'interface avancée 44 n'est pas désactivée avant le retour du point de commande 20 à l'utilisation dédiée au système domotique 10, en mode avancé M14 duquel l'interface avancée 44 peut être désactivée manuellement par une commande dédiée. En alternative, l'interface avancée 44 peut être désactivée après un temps de non-utilisation prédéterminé.

Le dispositif d'affichage 40 ne comprend pas nécessairement de moyens matériels et logiciels de génération de données et/ou de génération de l'interface avancée 44. En mode avancé M14, le dispositif 40 réalise uniquement l'affichage des données sur les moyens 42, tandis que l'interface avancée 44 est générée et déportée par le point de commande 20 et ses moyens 28. C'est le point de commande 20 qui génère l'image à afficher et la transmet au dispositif 40. Les informations échangées entre l'interface avancée 44 et les équipements domotiques 30 transitent par le point de commande 20. Autrement dit, il n'est pas utile que le dispositif 40 constitue un point de commande des équipements domotiques 30.

Selon une alternative, le dispositif d'affichage 40 peut être configuré pour générer des données, et pas seulement afficher les images qui sont générées par les moyens 28 du point de commande 20. Dans ce cas, un dialogue bidirectionnel peut s'instaurer dans le système domotique 10, entre le point de commande 20 et le dispositif d'affichage 40, par exemple selon le protocole HDMI ou par infrarouge. En pratique, le dispositif 40 peut par exemple générer un pointeur et gérer les déplacements de ce pointeur sur les moyens d'affichage 42, en fonction des déplacements du point de commande 20.

A titre d'ordre de grandeur, le point de commande 20 tient dans une ou deux mains de l'utilisateur U10, tandis que les moyens d'affichage 42 occupent une surface plane mesurant plusieurs décimètres en largeur et en hauteur.

De préférence, le dispositif 40 est configuré pour pouvoir changer d'affichage lorsqu'il est en mode avancé M14, par le biais du point de commande 20 ou de l'appareil de commande 49. Dans ce cas, le dispositif 40 affiche sélectivement sur les moyens d'affichage 42, soit l'interface avancée 44 du système domotique 10, soit un contenu correspondant à celui du dispositif d'affichage 40 en mode normal M12, par exemple une émission de télévision, un film ou un bureau virtuel d'ordinateur.

Selon une variante, une information émise par l'appareil de commande 49 est transmise au moins à certains, voire tous les appareils auxiliaires connectés au dispositif d'affichage 40, tel qu'un lecteur vidéo ou une console de jeu. De préférence, en mode avancé M14, une information émise par l'appareil 49 peut être transmise au point de commande 20 du système domotique 10.

Selon une autre variante, le système domotique 10 peut être configuré de manière que l'appareil de commande 49 et/ou les moyens d'acquisition 48 permettent à l'utilisateur U10 de naviguer dans l'interface avancée 44, en complément ou en remplacement de l'interface 24.

Selon une variante non représentée, le système domotique 10 peut comprendre plusieurs dispositif d'affichage 40 distincts du point de commande 20, par exemple plusieurs téléviseurs et ordinateurs munis d'écrans. Dans cette optique, le point de commande 20 peut inclure une fonction de sélection manuelle ou automatique du dispositif d'affichage 40 sur lequel les moyens 28 exportent l'interface avancée 44 en mode avancé M14. La sélection peut être manuelle si plusieurs dispositifs d'affichage 40 sont disponibles à proximité du point de commande 20. En alternative, la sélection peut être automatique, avec établissement de la liaison 16 entre le point de commande 20 et le dispositif 40 le plus proche, ou avec le dispositif 40 renseigné comme étant privilégié au sein du système 10, ou selon une combinaison de paramètres prédéterminés.

Quel que soit le mode de réalisation, le système domotique 10 procure un confort d'utilisation élevé, avec un point de commande 20 mobile et pratique.

## Revendications

1. Système domotique (10), fonctionnant sélectivement dans un mode normal (M12) ou dans un mode avancé (M14) et comprenant :
- un point de commande (20) muni d'une interface homme-machine de saisie et d'affichage (22) et de moyens (26) de communication filaire ou sans-fil,
- au moins un équipement domotique (31-35) piloté par l'intermédiaire du point de commande (20),
- un dispositif d'affichage (40) distinct du point de commande (20), muni de moyens (42) d'affichage et de moyens (46) de communication avec le point de commande (20),
**caractérisé :**
- **en ce qu'**en mode normal (M12), le dispositif d'affichage (40) est indépendant du point de commande (20) et de chaque équipement domotique (31-35), et
- **en ce que** le point de commande (20) comprend des moyens matériels et logiciels (28) d'exportation de données à afficher sur le dispositif d'affichage (40), en mode avancé (M14) du système domotique (10) où :
- le point de commande (20) génère les données à afficher et les transmet au dispositif d'affichage (40) ; et
- l'interface homme-machine de saisie et d'affichage (22) évolue en une interface utilisateur de saisie d'informations (24) relatives aux données affichées sur le dispositif d'affichage (40).

2. Système domotique selon la revendication précédente, **caractérisé en ce que** des images générées par le point de commande (20), ainsi que des informations concernant l'affichage de ces images, constituent les données exportées vers le dispositif d'affichage (40).

3. Système domotique selon l'une des revendications précédentes, **caractérisé en ce que** le point de commande (20) pilote chacun ou au moins certains des équipements domotiques (31-35), d'une part, avec une synchronisation préalable entre le point de commande (20) et les équipements domotiques (31-35) et, d'autre part, à la fois en mode normal (M12) et en mode avancé (M14), alors que le dispositif d'affichage (40) ne constitue un point de commande des équipements domotiques (31-35) ni en mode normal (M12) ni en mode avancé (M14).

4. Système domotique selon l'une des revendications précédentes, **caractérisé en ce que** le dispositif d'affichage (40) en mode avancé (M14) affiche simultanément un nombre plus important de données non modifiables et/ou de paramètres réglables relatifs au système domotique (10) que l'interface homme-machine de saisie et d'affichage (22).

5. Système domotique selon l'une des revendications précédentes, **caractérisé en ce que** l'interface utilisateur de saisie d'informations (24) comprend un choix de menus et/ou de fonctions associés au système domotique (10), notamment associés à chacun ou au moins certains des équipements domotiques (31-35), et **en ce que** les moyens d'affichage (42) affichent des images différentes selon la fonction et/ou le menu sélectionné sur l'interface utilisateur de saisie d'informations (24).

6. Système domotique selon l'une des revendications précédentes, **caractérisé en ce que** le dispositif d'affichage (40) en mode avancé (M14) affiche une interface homme-machine avancée (44) présentant un contenu enrichi par rapport au contenu de l'interface homme-machine de saisie et d'affichage (22) en mode normal (M12).

7. Système domotique selon la revendication précédente, **caractérisé en ce que** l'interface utilisateur de saisie d'informations (24) et l'interface homme-machine avancée (44) présentent un contenu respectif modifiable en accord l'une avec l'autre, selon des menus et/ou fonctions sélectionnés sur l'interface utilisateur de saisie d'informations (24).

8. Système domotique selon l'une des revendications 6 ou 7, **caractérisé en ce que** les informations échangées entre l'interface homme-machine avancée (44) et les équipements domotiques (30) transitent par le point de commande (20).

9. Système domotique selon l'une des revendications précédentes, **caractérisé en ce que** l'interface utilisateur de saisie d'informations (24) comprend au moins l'un des éléments choisis parmi un clavier, une souris, un pointeur infrarouge, une surface tactile, un microphone et/ou un ensemble de capteurs de mouvement d'un utilisateur (U10).

10. Système domotique selon la revendication précédente, **caractérisé en ce que** l'interface utilisateur de saisie d'informations (24) présente des éléments différents en mode avancé (M14) par rapport à l'interface homme-machine de saisie et d'affichage (22) en mode normal (M12), notamment moins ou aucun élément d'affichage d'informations.

11. Système domotique selon l'une des revendications précédentes, **caractérisé en ce que** les moyens (26) de communication filaire ou sans-fil du point de commande (20) et les moyens (46) de communication du dispositif d'affichage (40) avec le point de commande (20) utilisent un protocole choisi parmi le protocole HDMI, le protocole MiniDisplay, le protocole Wireless-Display, le protocole Bluetooth, le protocole VGA ou le protocole Composite.

12. Système domotique selon l'une des revendications précédentes, **caractérisé en ce que** le dispositif d'affichage (40) en mode avancé (M14) affiche sur les moyens d'affichage (42), sélectivement par le biais du point de commande (20) ou d'autres moyens (49) de commande propres au dispositif d'affichage (40),
- soit des données relatives au système domotique (10) en mode avancé (M14),
- soit un contenu correspondant au dispositif d'affichage (40) en mode normal (M12), par exemple une émission de télévision.

13. Système domotique selon l'une des revendications précédentes, **caractérisé en ce que** le dispositif d'affichage (40) comprend également des moyens (48) d'acquisition d'informations émises par un utilisateur (U10), notamment des capteurs sonores, des capteurs de présence, des capteurs de mouvement et/ou des caméras vidéo.

14. Système domotique selon l'une des revendications précédentes, **caractérisé en ce que** le dispositif d'affichage (40) comprend également un appareil de commande (49) qui lui est propre, une information émise par cet appareil de commande (49) étant transmise au moins à certains des appareils auxiliaires connectés au dispositif d'affichage (40), tel qu'un lecteur vidéo, une console de jeu ou, en mode avancé (M14), le point de commande (20) du système domotique (10).

15. Système domotique selon l'une des revendications précédentes, **caractérisé en ce que** le dispositif d'affichage (40) est un téléviseur, un vidéoprojecteur, un pico-projecteur, un ordinateur ou un projecteur holographique.

16. Système domotique selon l'une des revendications précédentes, **caractérisé en ce que** le système domotique (10) comprend plusieurs dispositif d'affichage (40) distincts du point de commande (20) et **en ce que** le point de commande (20) inclut une fonction de sélection manuelle ou automatique du dispositif d'affichage (40) sur lequel les moyens matériels et logiciels d'exportation (28) exportent l'interface homme-machine avancée (44) en mode avancé (M14).

17. Procédé de mise en oeuvre d'un système domotique (10) fonctionnant sélectivement dans un mode normal (M12) ou dans un mode avancé (M14) et comprenant :
- un point de commande (20) muni d'une interface homme-machine de saisie et d'affichage (22) et de moyens (26) de communication filaire ou sans-fil,
- au moins un équipement domotique (31-35) piloté par le point de commande (20),
- un dispositif d'affichage (40) distinct du point de commande (20), muni de moyens (42) d'affichage et de moyens (46) de communication avec le point de commande (20),
le procédé étant **caractérisé en ce que**, d'une part, en mode normal (M12) :
- l'interface homme-machine de saisie et d'affichage (22) est utilisée pour piloter les équipements domotiques (31-35), et
- le dispositif d'affichage (40) est indépendant du point de commande (20) et de chaque équipement domotique (31-35)
et, d'autre part, en mode avancé (M14) :
- des moyens matériels et logiciels (28) équipant le point de commande (20) exportent des données à afficher sur le dispositif d'affichage (40),
- le point de commande (20) génère les données à afficher et les transmet au dispositif d'affichage (40), et
- l'interface homme-machine de saisie et d'affichage (22) évolue en une interface utilisateur de saisie d'informations (24) relatives aux données affichées sur le dispositif d'affichage (40).

18. Procédé selon la revendication 17, **caractérisé en ce que** le passage du mode normal (M12) au mode avancé (M14) inclut des étapes suivantes :
a) une liaison (16) de communication filaire ou sans-fil est établie entre le point de commande (20) et le dispositif d'affichage (40),
b) les moyens matériels et logiciels (28) équipant le point de commande (20) exportent les données à afficher sur le dispositif d'affichage (40),
c) l'interface homme-machine de saisie et d'affichage (22) évolue en interface utilisateur de saisie d'informations (24) relatives aux données affichées sur le dispositif d'affichage (40).,
les étapes a), b) et c) étant successives ou simultanées.

## Patentansprüche

1. Haustechniksystem (10), welches wahlweise in einem Normalmodus (M12) oder in einem erweiterten Modus (M14) betreibbar ist, umfassend:
- eine mit einer Mensch-Maschine-Schnittstelle (22) zur Erfassung und Anzeige und drahtgebundenen oder drahtlosen Kommunikationsmitteln (26) ausgestattete Steuerungseinrichtung (20),
- mindestens ein mittels der Steuerungseinrichtung (20) steuerbares haustechnisches Gerät (31-35),
- eine von der Steuerungseinrichtung (20) verschiedene Anzeigevorrichtung (40), welche mit Anzeigemitteln (42) und Kommunikationsmitteln (46) zur Kommunikation mit der Steuerungseinrichtung (20) ausgestattet ist,
**dadurch gekennzeichnet,**
- **dass** die Anzeigevorrichtung (40) im Normalmodus (M12) von der Steuerungseinrichtung (20) und von jedem haustechnischen Gerät (31-35) unabhängig ist, und
- **dass** die Steuerungseinrichtung (20) im erweiterten Modus (M14) des Haustechniksystems (10) Hardware- und Software-Mittel (28) zum Exportieren von an der Anzeigevorrichtung (40) anzuzeigenden Daten aufweist, wobei
-- die Steuerungseinrichtung (20) die anzuzeigenden Daten erzeugt und diese an die Anzeigevorrichtung (40) überträgt, und
-- sich die Mensch-Maschine-Schnittstelle (22) zur Erfassung und Anzeige hin zu einer Benutzerschnittstelle (24) zur Erfassung von auf die an der Anzeigevorrichtung (40) angezeigten Daten bezogenen Informationen entwickelt.

2. Haustechniksystem nach dem vorangehenden Anspruch,
**dadurch gekennzeichnet,**
**dass** die von der Steuerungseinrichtung (20) erzeugten Bilder sowie die die Anzeige dieser Bilder betreffenden Informationen die an die Anzeigevorrichtung (40) exportierten Daten bilden.

3. Haustechniksystem nach einem der vorangehenden Ansprüche,
**dadurch gekennzeichnet,**
**dass** die Steuerungseinrichtung (20) alle oder zumindest einige haustechnische Geräte (31-35) steuert, wobei die Steuerung zum einen nach vorheriger Synchronisation der Steuerungseinrichtung (20) mit den haustechnischen Geräten (31-35) und zum anderen zugleich im Normalmodus (M12) und im erweiterten Modus (M14) erfolgt, wohingegen die Anzeigevorrichtung (40) weder im Normalmodus (M12) noch im erweiterten Modus (M14) eine Steuerungseinrichtung für die haustechnischen Geräte (31-35) bildet.

4. Haustechniksystem nach einem der vorangehenden Ansprüche,
**dadurch gekennzeichnet,**
**dass** die Anzeigevorrichtung (40) im erweiterten Modus (M14) eine größere Anzahl an nicht-modifizierbaren Daten und/oder an auf das Haustechniksystem (10) bezogenen einstellbaren Parametern gleichzeitig anzeigt als die Mensch-Maschine-Schnittstelle (22) zur Erfassung und Anzeige.

5. Haustechniksystem nach einem der vorangehenden Ansprüche,
**dadurch gekennzeichnet,**
**dass** die Benutzerschnittstelle (24) zur Erfassung von Informationen eine Auswahl an mit dem Haustechniksystem (10) verbundenen Menüs und/oder Funktionen umfasst, welche insbesondere mit allen oder zumindest einigen haustechnischen Geräten (31-35) verbunden sind, und dass die Anzeigemittel (42) unterschiedliche Bilder entsprechend der bzw. dem an der Benutzerschnittstelle (24) zur Erfassung von Informationen ausgewählten Funktion und/oder Menü anzeigen.

6. Haustechniksystem nach einem der vorangehenden Ansprüche,
**dadurch gekennzeichnet,**
**dass** die Anzeigevorrichtung (40) im erweiterten Modus (M14) eine erweiterte Mensch-Maschine-Schnittstelle (44) anzeigt, welche im Vergleich zu dem Inhalt der Mensch-Maschine-Schnittstelle (22) zur Erfassung und Anzeige im Normalmodus (M12) einen angereicherten Inhalt aufweist.

7. Haustechniksystem nach einem der vorangehenden Ansprüche,
**dadurch gekennzeichnet,**
**dass** die Benutzerschnittstelle (24) zur Erfassung von Informationen und die erweiterte Mensch-Maschine-Schnittstelle (44) jeweils einen im Einklang miteinander modifizierbaren Inhalt entsprechend den an der Benutzerschnittstelle (24) zur Erfassung von Informationen ausgewählten Menüs und/oder Funktionen aufweisen.

8. Haustechniksystem nach Anspruch 6 oder 7,
**dadurch gekennzeichnet,**
**dass** die zwischen der erweiterten Mensch-Maschine-Schnittstelle (44) und den haustechnischen Geräten (30) ausgetauschten Informationen die Steuerungseinrichtung (20) durchlaufen.

9. Haustechniksystem nach einem der vorangehenden Ansprüche,
**dadurch gekennzeichnet,**
**dass** die Benutzerschnittstelle (24) zur Erfassung von Informationen mindestens ein aus den folgenden Elementen auswählbares Element aufweist: eine Tastatur, eine Maus, einen Infrarot-Laserpointer, einen Touchscreen, ein Mikrophon und/oder eine Anordnung von Sensoren, welche die Bewegungen eines Benutzers (U10) erfassen.

10. Haustechniksystem nach dem vorangehenden Anspruch,
**dadurch gekennzeichnet,**
**dass** die Benutzerschnittstelle (24) zur Erfassung von Informationen im erweiterten Modus (M14) im Vergleich zu der Mensch-Maschine-Schnittstelle (22) zur Erfassung und Anzeige im Normalmodus (M12) unterschiedliche Elemente aufweist, insbesondere weniger oder gar keine Elemente zur Anzeige von Informationen.

11. Haustechniksystem nach einem der vorangehenden Ansprüche,
**dadurch gekennzeichnet,**
**dass** die drahtgebundenen oder drahtlosen Kommunikationsmittel (26) der Steuerungseinrichtung (20) und die Kommunikationsmittel (46) zur Kommunikation der Anzeigevorrichtung (40) mit der Steuerungseinrichtung (20) ein aus den folgenden Protokollen auswählbares Protokoll verwenden: HDMI-Protokoll, MiniDisplay-Protokoll, Wireless-Display-Protokoll, Bluetooth-Protokoll, VGA-Protokoll oder Composite-Protokoll.

12. Haustechniksystem nach einem der vorangehenden Ansprüche,
**dadurch gekennzeichnet,**
**dass** die Anzeigevorrichtung (40) im erweiterten Modus (M14) auf den Anzeigemitteln (42), wahlweise mittels der Steuerungseinrichtung (20) oder anderen der Anzeigevorrichtung (40) zugehörigen Steuerungsmitteln (49) Folgendes anzeigt:
- entweder auf das Haustechniksystem (10) im erweiterten Modus (M14) bezogene Daten,
- oder einen der Anzeigevorrichtung (40) im Normalmodus (M12) entsprechenden Inhalt, zum Beispiel eine Fernsehsendung.

13. Haustechniksystem nach einem der vorangehenden Ansprüche,
**dadurch gekennzeichnet,**
**dass** die Anzeigevorrichtung (40) auch Mittel (48) zur Erfassung von durch einen Benutzer (U10) ausgesendeten Informationen aufweist, insbesondere Akustiksensoren, Anwesenheitssensoren, Bewegungssensoren und/oder Videokameras.

14. Haustechniksystem nach einem der vorangehenden Ansprüche,
**dadurch gekennzeichnet,**
**dass** die Anzeigevorrichtung (40) auch ein eigenes Steuergerät (49) aufweist, wobei eine von dem Steuergerät (49) ausgesendete Information an mindestens einige der mit der Anzeigevorrichtung (40) verbundenen Zusatzgeräte übertragbar ist, wie beispielsweise an ein Videolesegerät, eine Spielkonsole oder, im erweiterten Modus (M14), die Steuerungseinrichtung (20) des Haustechniksystems (10).

15. Haustechniksystem nach einem der vorangehenden Ansprüche,
**dadurch gekennzeichnet,**
**dass** die Anzeigevorrichtung (40) ein Fernsehgerät, ein Videoprojektor, ein Pico-Projektor, ein Computer oder ein holografischer Projektor ist.

16. Haustechniksystem nach einem der vorangehenden Ansprüche,
**dadurch gekennzeichnet,**
**dass** das Haustechniksystem (10) mehrere von der Steuerungseinrichtung (20) verschiedene Anzeigevorrichtungen (40) aufweist und dass die Steuerungseinrichtung (20) eine manuelle oder automatische Auswahlfunktion der Anzeigevorrichtung (40), an welcher (40) die Hardware- und Software-Mittel zum Exportieren (28) die erweiterte Mensch-Maschine-Schnittstelle (44) im erweiterten Modus (M14) exportieren, umfasst.

17. Verfahren zum Betrieb eines im Normalmodus (M12) und im erweiterten Modus (M14) betreibbaren Haustechniksystems (10), umfassend:
- eine mit einer Mensch-Maschine-Schnittstelle (22) zur Erfassung und Anzeige und drahtgebundenen oder drahtlosen Kommunikationsmitteln (26) ausgestattete Steuerungseinrichtung (20),
- mindestens ein mittels der Steuerungseinrichtung (20) gesteuertes haustechnisches Gerät (31-35),
- eine von der Steuerungseinrichtung (20) verschiedene Anzeigevorrichtung (40), welche mit Anzeigemitteln (42) und Kommunikationsmitteln (46) zur Kommunikation mit der Steuerungseinrichtung (20) ausgestattet ist,
wobei das Verfahren zum einen im Normalmodus (M12) **dadurch gekennzeichnet ist,**
- **dass** die Mensch-Maschine-Schnittstelle (22) zur Erfassung und Anzeige zum Steuern der haustechnischen Geräte (31-35) verwendet wird,
- **dass** die Anzeigevorrichtung (40) unabhängig von der Steuerungseinrichtung (20) und von jedem haustechnischen Gerät (31-35) ist,
und zum anderen im erweiterten Modus (M14) **dadurch gekennzeichnet ist,**
- **dass** Hardware- und Software-Mittel (28), mit denen die Steuerungseinrichtung (20) ausgestattet ist, an der Anzeigevorrichtung (40) anzuzeigende Daten exportieren,
- **dass** die Steuerungseinrichtung (20) die anzuzeigenden Daten erzeugt und diese an die Anzeigevorrichtung (40) überträgt, und
- **dass** sich die Mensch-Maschine-Schnittstelle (22) zur Erfassung und Anzeige hin zu einer Benutzerschnittstelle (24) zur Erfassung von auf die an der Anzeigevorrichtung (40) angezeigten Daten bezogenen Informationen entwickelt.

18. Verfahren nach Anspruch 17,
**dadurch gekennzeichnet,**
**dass** der Übergang von dem Normalmodus (M12) zum erweiterten Modus (M14) folgende Schritte umfasst:
a) Herstellen einer Verbindung (16) mittels drahtgebundener oder drahtloser Kommunikation zwischen der Steuerungseinrichtung (20) und der Anzeigevorrichtung (40),
b) Exportieren der an der Anzeigevorrichtung (40) anzuzeigenden Daten durch die Hardware- und Software-Mittel (28), mit denen die Steuerungseinrichtung (20) ausgestattet ist,
c) sich Entwickeln der Mensch-Maschine-Schnittstelle (22) zur Erfassung und Anzeige hin zu einer Benutzerschnittstelle (24) zur Erfassung von auf die an der Anzeigevorrichtung (40) angezeigten Daten bezogenen Informationen,
wobei die Schritte a), b) und c) nacheinander oder gleichzeitig ablaufen.

## Claims

1. Domotic system ( 10), functioning selectively in a normal mode (M 12) or in an advanced mode (M 14) and comprising:
- a control point (20) equipped with a man-machine interface for capture and display (22) and with means (26) for wired or wireless communication,
- at least one item of domotic equipment (31 - 35) controlled by means of the control point (20),
- a display device (40), separate from the control point (20), equipped with means (42) for display and means (46) for communication with the control point (20),
**characterised:**
- **in that**, in normal mode (M12), the display device (40) is independent of the control point (20) and of each item of domotic equipment (31 - 35), and
- **in that** the control point (20) comprises hardware and software (28) for exporting data to be displayed on the display device (40), in advanced mode (M14) of the domotic system (10) where:
- the control point (20) generates the data to be displayed and transmits them to the display device (40); and
- the man-machine interface for capture and display (22) develops into a user interface for capture of information (24) relating to data displayed on the display device (40).

2. Domotic system according to the preceding claim, **characterised in that** images generated by the control point (20) and also information relating to the display of these images constitute the data exported to the display device (40).

3. Domotic system according to one of the preceding claims, **characterised in that** the control point (20) controls each or at least some of the domotic equipment (31 - 35), on the one hand, with a prior synchronisation between the control point (20) and the domotic equipment (31 - 35) and, on the other hand, both in normal mode (M12) and in advanced mode (M14), when the display device (40) does not constitute a control point of the domotic equipment (31 - 35) either in normal mode (M12) or in advanced mode (M 14).

4. Domotic system according to one of the preceding claims, **characterised in that** the display device (40), in advanced mode (M14), displays simultaneously a larger number of non-modifiable data and/or of controllable parameters relating to the domotic system (10) than the man-machine interface for capture and display (22).

5. Domotic system according to one of the preceding claims, **characterised in that** the user interface for capture of information (24) comprises a choice of menus and/or of functions associated with the domotic system (10), in particular associated with each or at least some of the domotic equipment (31 - 35), and **in that** the display means (42) displays different images according to the function and/or the menu selected on the user interface for capture of information (24).

6. Domotic system according to one of the preceding claims, **characterised in that** the display device (40), in advanced mode (M14), displays an advanced man-machine interface (44) which has a content enhanced relative to the content of the man-machine interface for capture and display (22) in normal mode (M12).

7. Domotic system according to the preceding claim, **characterised in that** the user interface for capture of information (24) and the advanced man-machine interface (44) have a respective content which can be modified in accordance one with the other, according to the menus and/or functions selected on the user interface for capture of information (24).

8. Domotic system according to one of the claims 6 or 7, **characterised in that** the information exchanged between the advanced man-machine interface (44) and the domotic equipment (30) flows through the control point (20).

9. Domotic system according to one of the preceding claims, **characterised in that** the user interface for capture of information (24) comprises at least one of the elements chosen from a keyboard, a mouse, an infrared pointer, a touch surface, a microphone and/or an assembly of sensors of movement of a user (U10).

10. Domotic system according to the preceding claim, **characterised in that** the user interface for capture of information (24) has different elements in advanced mode (M4) relative to the man-machine interface for capture and display (22) in normal mode (M12), in particular fewer or no element for information display.

11. Domotic system according to one of the preceding claims, **characterised in that** the wired or wireless communication means (26) of the control point (20) and the communication means (46) of the display device (40) with the control point (20) use a protocol chosen from the HDMI protocol, the MiniDisplay protocol, the Wirelss-Display protocol, the Bluetooth protocol, the VGA protocol or the Composite protocol.

12. Domotic system according to one of the preceding claims, **characterised in that** the display device (40), in advanced mode (M14), displays on the display means (42), selectively by means of the control point (20) or other control means (49) specific to the display device (40),
- either data relating to the domotic system (10) in advanced mode (M14),
- or a content corresponding to the display device (40) in normal mode (M12), for example a television broadcast.

13. Domotic system according to one of the preceding claims, **characterised in that** the display device (40) comprises likewise means (48) for capture of information emitted by a user (U10), in particular sound sensors, presence sensors, movement sensors and/or video cameras.

14. Domotic system according to one of the preceding claims, **characterised in that** the display device (40) comprises likewise a control device (49) which is specific to it, information emitted by this control device (49) being transmitted to at least some of the auxiliary devices connected to the display device (40), such as a video reader, a games console or, in advanced mode (M14), the control point (20) of the demotic system (10).

15. Domotic system according to one of the preceding claims, **characterised in that** the display device (40) is a television, a video projector, a pico projector, a computer or a holographic projector.

16. Domotic system according to one of the preceding claims, **characterised in that** the domotic system (10) comprises several display devices (40), separate from the control point (20), and **in that** the control point (20) includes a manual or automatic selection function of the display device (40) on which the hardware and software for exportation (28) export the advanced man-machine interface (44) in advanced mode (M14).

17. Method of use of a domotic system (10) functioning selectively in a normal mode (M 12) or in an advanced mode (M14) and comprising:
- a control point (20) equipped with a man-machine interface for capture and display (22) and means (26) for wired or wireless communication,
- at least one item of domotic equipment (31 - 35) controlled by the control point (20),
- a display device (40), separate from the control point (20), equipped with means (42) for display and means (46) for communication with the control point (20),
the method being **characterised in that**, on the one hand, in normal mode (M12):
- the man-machine interface for capture and display (22) is used to control the domotic equipment (31 - 35), and
- the display device (40) is independent of the control point (20) and of each item of domotic equipment (31 - 35),
and, on the other hand, in advanced mode (M14):
- the hardware and software (28) equipping the control point (20) export data to be displayed on the display device (40),
- the control point (20) generates the data to be displayed and transmits them to the display device (40), and
- the man-machine interface for capture and display (22) develops into a user interface for capture of information (24) relating to data displayed on the display device (40).

18. Method according to claim 17, **characterised in that** the transition from normal mode (M12) to advanced mode (M14) includes the following steps:
a) a wired or wireless communication link (16) is established between the control point (20) and the display device (40),
b) the hardware and software (28) equipping the control point (20) export the data to be displayed on the display device (40),
c) the man-machine interface for capture and display (22) develops into a user interface for capture of information (24) relating to data displayed on the display device (40),
steps a), b) and c) being successive or simultaneous.
